# FASCICULE DE BREVET EUROPEEN

(11) **EP 2 764 602 B1**
(45) Date de publication et mention de la délivrance du brevet: **09.11.2016**
(21) Numéro de dépôt: 12779117.6
(22) Date de dépôt: 05.10.2012
(51) Int. Cl.: H02J 7/14, B60R 16/03

(54) **RÉSEAU ÉLECTRIQUE POUR VÉHICULE AYANT AU MOINS UN COMPOSANT ACTIVABLE**
ELEKTRISCHES NETZWERK FÜR EIN FAHRZEUG MIT MINDESTENS EINER AKTIVIERBAREN KOMPONENTE
ELECTRICAL NETWORK FOR A VEHICLE, HAVING AT LEAST ONE COMPONENT THAT CAN BE ACTIVATED

(30) Priorité: 05.10.2011 FR 1158984
(43) Date de publication de la demande: 13.08.2014
(73) Titulaire: Valeo Systèmes de Contrôle Moteur, 95800 Cergy (FR)
(72) Inventeur: DECOSTER, Sylvain, F-78330 Fontenay Le Fleury (FR); CHENG, Thierry, F-78610 Les Brevieres (FR); CORNIGLION, Cyrille, F-95120 Ermont (FR); RECHDAN, Raymond, F-94440 Villecresnes (FR); DELION, Sylvain, F-75012 Paris (FR)
(74) Mandataire: Garcia, Christine
(86) Numéro de dépôt international: PCT/FR2012/052266
(87) Numéro de publication internationale: WO 2013/050720

(56) Documents cités:
- EP-A2- 1 376 812

## Description

La présente invention concerne un réseau électrique pour véhicule, le réseau comportant au moins un premier composant électronique et au moins un deuxième composant électronique, le deuxième composant électronique consommant une puissance électrique supérieure, notamment très supérieure, à celle consommée par le premier composant électronique. Le deuxième composant électronique est activable, c'est-à-dire qu'il peut ne fonctionner que par intermittence. Lorsqu'il est activé, le deuxième composant électronique peut absorber un courant de l'ordre de quelques centaines d'Ampères.

Le deuxième composant électronique est par exemple un compresseur configuré pour délivrer de l'air dans la ligne d'admission d'un moteur thermique. Ce compresseur peut permettre de seconder le turbocompresseur du véhicule à bas régime et pendant les augmentations transitoires de charge.

Les premiers composants électroniques sont par exemple des composants de sécurité et/ou de confort du véhicule, par exemple les phares, le poste de radio ou encore l'installation de climatisation.

Il est connu d'alimenter les premier composants électroniques et le deuxième composant électronique du réseau par une source d'alimentation qui est une batterie. L'activation du deuxième composant électronique peut poser des problèmes vis-à-vis du fonctionnement des premiers composants électroniques, du fait de l'importance de la puissance électrique consommée par le deuxième composant électronique. Ce problème va être illustré dans le cas d'un réseau alimenté par une batterie délivrant une tension de 12V et qui comprend des premiers composants électroniques nécessitant pour fonctionner une tension au moins de l'ordre de 6 à 8 V.

Lorsque le deuxième composant électronique est le compresseur mentionné ci-dessus, son activation peut modifier les propriétés du réseau, du fait de la différence entre la puissance qu'il consomme et la puissance consommée par les premiers composants électroniques. Une baisse de la tension délivrée par la batterie, par exemple une baisse d'un ou plusieurs Volts, peut être causée par l'activation du deuxième composant électronique. La tension délivrée par la batterie peut en conséquence devenir insuffisante pour que les premiers composants électroniques soient alimentés ou, à tout le moins, fonctionnent de manière nominale, ce qui peut poser un problème de sécurité et/ou de confort pour l'utilisateur du véhicule.

Pour remédier à ce problème, il a été proposé d'alimenter les premiers composants électroniques à travers un système de maintien de tension tel qu'un convertisseur DC/DC.

L'emploi d'un tel système de maintien de tension est onéreux et son efficacité est limitée par la puissance maximale que peut convertir ce système. En outre, la batterie doit à elle seule suffire à l'alimentation des premiers composants et du deuxième composant électronique lorsque ces composants sont activés en même temps, ce qui implique d'utiliser une batterie de taille importante.

Le document EP 1376812 A2décrit un réseau électrique selon le préambule de la revendication 1.

Il existe un besoin pour permettre de disposer d'un réseau électrique de véhicule ayant au moins un premier composant électronique et au moins un deuxième composant électronique consommant une puissance électrique supérieure à celle consommée par le premier composant électronique, le réseau permettant une alimentation simultanée des premier et deuxième composants sans que cela n'affecte le fonctionnement de ces premier et deuxième composants et que cela ne soit trop onéreux.

L'invention vise à répondre au besoin ci-dessus et elle y parvient, selon l'un de ses aspects, à l'aide d'un réseau électrique pour véhicule selon la revendication 1.

Au sens de l'invention, les première et deuxième valeurs de courant échangé sont des valeurs efficaces.

L'échange de courant peut ou non se faire du même sens lorsque l'organe de liaison est dans la première configuration et lorsque l'organe de liaison est dans la deuxième configuration. Lorsque l'organe de liaison est dans la première configuration ou dans la deuxième configuration, du courant passe par exemple du premier circuit au deuxième circuit.

Le passage de la première à la deuxième configuration de l'organe de liaison, sans autre modification du réseau, notamment en ce qui concerne le nombre de sources d'alimentation ou la puissance qu'elles délivrent, conduit à une diminution de la valeur du courant échangé à travers l'organe de liaison.

Le rapport en valeur absolue entre la première valeur du courant échangé entre le premier et le deuxième circuit dans la première configuration et la deuxième valeur du courant échangé entre le premier et le deuxième circuit dans la deuxième configuration peut être d'au moins deux, notamment au moins trois, quatre, cinq, voire dix.

L'aspect de l'invention ci-dessus permet, en utilisant deux circuits, de limiter autant que possible les perturbations induites par l'activation du deuxième composant électronique au deuxième circuit, de sorte que le fonctionnement des premiers composants électroniques n'est que peu ou pas affecté par l'activation du deuxième composant électronique. On peut qualifier le premier circuit de circuit stabilisé et le deuxième circuit de circuit perturbé.

La première source d'alimentation peut être quasiment dédiée à l'alimentation des premiers composants électroniques et, lorsque l'organe de liaison est dans la deuxième configuration, du fait de l'échange réduit voire nul de courant entre le premier et le deuxième circuit, les premiers composants électroniques reçoivent une tension stable et de valeur adéquate, garantissant leur bon fonctionnement.

Le rapport entre la puissance électrique consommée par un deuxième composant électronique, respectivement la puissance électrique consommée tous les deuxièmes composants, et la puissance électrique consommée par un premier composant électronique, respectivement la puissance électrique consommée par tous les premiers composants, peut être supérieur à 1, étant notamment compris entre 1 et 5.

Les premiers composants électroniques sont par exemple des composants de confort et/ou de sécurité, étant notamment choisis parmi la liste suivante : phares ou tout système d'éclairage, poste de radio, poste de télévision, système de GPS, système de climatisation, ABS, correcteur de trajectoire (ESP), avertisseur sonore, direction assistée ou divers calculateurs.

Le deuxième composant électronique est par exemple un compresseur configuré pour délivrer de l'air dans la ligne d'admission d'un moteur thermique. Ce compresseur seconde par exemple le turbocompresseur du véhicule dans certains cas. L'invention n'est cependant pas limitée à un tel exemple de deuxième composant électronique et peut encore s'appliquer à tout composant électronique activable et présentant vis-à-vis des premiers composants électroniques le rapport de puissance ci-dessus.

La puissance consommée par le deuxième composant électronique ou par tous les deuxièmes composants peut être supérieure ou égale à 1 kW.

Selon un premier mode de réalisation de l'invention, l'organe de liaison comprend un interrupteur, cet interrupteur étant fermé lorsque l'organe de liaison est dans la première configuration et ouvert lorsque l'organe de liaison est dans la deuxième configuration.

Dans cet exemple, la deuxième valeur du courant échangé entre le premier et le deuxième circuit est nulle lorsque l'organe de liaison est dans la seconde configuration. Dans ce cas, on a un découplage total entre les deux circuits lorsque l'organe de liaison est dans la deuxième configuration, de sorte que le fonctionnement des premiers composants électroniques n'est pas perturbé par l'activation du deuxième composant électronique.

Dans un exemple particulier, cet interrupteur peut fonctionner de façon linéaire lorsqu'il passe de la configuration ouverte à la configuration fermée.

Selon un deuxième mode de réalisation de l'invention, l'organe de liaison comprend une impédance variable et la valeur de l'impédance dans la première configuration de l'organe de liaison est inférieure à celle dans la deuxième configuration de l'organe de liaison. Cette impédance variable est par exemple une résistance variable. La valeur de l'impédance peut varier de façon linéaire sur toute ou partie de la plage de fonctionnement de cette impédance.

L'augmentation de la valeur de l'impédance de l'organe de liaison dans la deuxième configuration permet que l'organe de liaison s'oppose à l'échange de courant entre les deux circuits dans la deuxième configuration par rapport à ce qui se passe dans la première configuration. Dans la deuxième configuration, l'impédance constitue ainsi un obstacle à l'alimentation par la première source d'alimentation du deuxième composant électronique. Ainsi, le premier circuit n'est que peu affecté par l'activation du deuxième composant électronique.

Le rapport entre l'impédance dans la deuxième configuration et l'impédance dans la première configuration peut être égal à au moins dix, étant par exemple de l'ordre de quelques dizaines.

L'organe de liaison peut n'être constitué que par les éléments ci-dessus. L'organe de liaison est par exemple un interrupteur ou une résistance variable.

La première et la deuxième source d'alimentation peuvent être des unités de stockage d'énergie, notamment des batteries. Chacune des sources d'alimentation comprend par exemple plusieurs batteries en série et/ou en parallèle.

La première batterie délivre par exemple une tension de l'ordre de 12 V et la deuxième batterie délivre par exemple une tension comprise entre 12 V et 30 V. Plus généralement, la tension délivrée par la deuxième batterie peut avoir la même valeur ou une valeur différente de celle délivrée par la première batterie.

L'unité de contrôle peut être configurée pour commander l'activation et/ou la désactivation du deuxième composant électronique.

L'unité de contrôle peut être configurée pour détecter quelle est la configuration de l'organe de liaison avant d'activer le deuxième composant électronique et, lorsque l'organe de liaison est dans la première configuration, commander son passage dans la deuxième configuration avant d'activer le deuxième composant électronique ou simultanément à son activation.

L'unité de contrôle peut être centralisée ou être formée de différentes sous-unités distinctes, chacune de ces sous-unités étant dédiée à une ou plusieurs tâches. L'unité de contrôle comprend par exemple un micro-contrôleur ou tout circuit programmable. L'unité de contrôle comprend par exemple tout circuit logique, analogique ou numérique.

La première configuration de l'organe de liaison peut ne pas être permise lorsque le deuxième composant électronique est activé. Ainsi, le fait de permettre ou non un échange de courant plus ou moins important entre les deux circuits peut dépendre de l'état activé ou non du deuxième composant électronique.

Le réseau comporte au moins un alternateur injectant du courant électrique dans le réseau, lorsqu'il est entraîné, pour alimenter la première et/ou la deuxième source d'alimentation. L'alternateur peut ainsi assurer en tout ou partie la recharge des sources d'alimentation du réseau et/ou l'alimentation des composants électroniques du réseau.

L'unité de contrôle peut être configurée pour commander l'organe de liaison de manière à ce que lorsque l'alternateur est entraîné, la première et/ou la deuxième source d'alimentation soient électriquement alimentées.

La première configuration de l'organe de liaison permet par exemple l'alimentation de la première source d'alimentation et de la deuxième source d'alimentation par l'alternateur. L'unité de contrôle commande par exemple l'alternateur pour que ce dernier injecte du courant dans le réseau et elle commande l'organe de liaison en première configuration lorsque l'alternateur est ainsi commandé.

Le cas échéant, lorsque l'alternateur injecte du courant dans le réseau, l'unité de contrôle peut déterminer quel est l'état du deuxième composant électronique avant de décider si l'organe de liaison doit être commandé en première configuration. Lorsque le deuxième composant électronique est activé, l'organe de liaison peut être commandé ou maintenu en deuxième configuration et lorsque le deuxième composant électronique n'est pas activé, l'organe de liaison peut être commandé en première configuration.

L'une au moins des sources d'alimentation peut être rechargée par l'alternateur à travers l'organe de liaison.

Le cas échéant, même lorsque l'organe de liaison est dans la deuxième configuration, une recharge simultanée des deux sources d'alimentation peut être effectuée par l'alternateur mais, dans ce cas, la source d'alimentation rechargée à travers l'organe de liaison peut être rechargée de façon moins efficace que l'autre source d'alimentation.

L'alternateur peut faire partie du premier circuit et alimenter électriquement, lorsqu'il est entraîné, la deuxième source d'énergie, au moins lorsque l'organe de liaison est dans la première configuration. Dans ce cas, l'alternateur alimente électriquement la première source d'alimentation dès qu'il est entraîné, indépendamment de la configuration de l'organe de liaison.

Le réseau comporte, en plus de l'organe de liaison, un commutateur et ce commutateur et l'alternateur peuvent être disposés dans le réseau de manière à ce que l'alternateur soit relié à la première source d'alimentation ou à la deuxième source d'alimentation en fonction de la position du commutateur.

« Relié » signifie aussi bien « relié directement » auquel cas l'alternateur est branché aux bornes de l'une des sources selon la position du commutateur que « relié indirectement », auquel cas un élément peut être monté entre l'une des sources et l'alternateur.

Lorsque le commutateur relie l'alternateur à l'une des sources d'alimentation, l'autre source d'alimentation peut néanmoins être rechargée par l'alternateur à travers l'organe de liaison.

L'alternateur peut faire partie du deuxième circuit et alimenter, lorsqu'il est entraîné, la première source d'alimentation, au moins lorsque l'organe de liaison est dans la première configuration. Dans ce cas, l'alternateur alimente la deuxième source d'alimentation dès qu'il est entraîné, indépendamment de la configuration de l'organe de liaison.

Dans tous les exemples ci-dessus, l'organe de liaison peut être interposé entre le premier et le deuxième circuit de sorte que :
- l'une au moins de la première et la deuxième source d'alimentation est rechargée à travers l'organe de liaison, au moins lorsqu'il est dans la première configuration,
- l'échange de courant entre le premier et le deuxième circuit est rendu plus difficile lorsque l'organe de liaison est dans la deuxième configuration, notamment lorsque le deuxième composant électronique est activé, de sorte que l'on réduit voire supprime la portion de la puissance délivrée par la première source d'alimentation qui est consommée par le deuxième composant électronique.

L'unité de contrôle peut commander de façon synchronisée le deuxième composant électronique et l'organe de liaison pour que ce dernier soit dans la deuxième configuration lorsque le deuxième composant électronique est activé. L'organe de liaison peut être dans la première configuration lorsque le deuxième composant électronique est désactivé ou peut rester en deuxième configuration même lorsque le deuxième composant électronique n'est pas activé.

L'activation du deuxième composant électronique peut être ou non permise lorsque l'alternateur est entraîné et injecte du courant électrique dans le réseau.

L'organe de liaison peut être configuré pour empêcher que la deuxième source d'alimentation n'alimente la première source d'alimentation, au moins lorsque l'organe de liaison est dans la première configuration. On peut ainsi s'assurer que la puissance délivrée par la deuxième source d'alimentation sera consacrée à l'alimentation du deuxième composant électronique. A cet effet, l'organe de liaison peut comprendre un composant unidirectionnel tel qu'une diode, par exemple.

Le réseau peut comporter un démarreur. Le démarreur peut faire partie du premier ou du deuxième réseau.

Dans un exemple de mise en oeuvre de l'invention, la première source d'alimentation, la deuxième source d'alimentation, le démarreur et l'organe de liaison sont disposés dans le réseau de telle sorte qu'au moins lorsque l'organe de liaison est dans la première configuration, le démarreur est alimenté à la fois par la première source d'alimentation et par la deuxième source d'alimentation. Dans un tel cas, chaque source d'alimentation ne fournit qu'une partie de la puissance consommée par le démarreur, ce qui permet de réduire la taille des sources d'alimentation, ces dernières étant dimensionnées pour le premier démarrage à froid du véhicule.

L'invention a encore pour objet, selon un autre de ses aspects, un procédé de gestion selon la revendication 16

Le réseau comporte un alternateur injectant du courant électrique dans le réseau lorsqu'il est entraîné.

L'unité de contrôle peut commander l'activation et/ou la désactivation du deuxième composant électronique et la commande de l'activation, respectivement de la désactivation, du deuxième composant électronique peut être synchronisée avec la commande de l'organe de liaison pour que ce dernier soit dans la deuxième, respectivement première, configuration.

Tout ou partie des caractéristiques présentées ci-dessus en rapport avec l'aspect de l'invention portant sur le réseau concernent également l'aspect de l'invention portant sur le procédé.

L'invention s'applique par exemple à des véhicules automobiles.

L'invention pourra être mieux comprise à la lecture de la description qui va suivre d'exemples non limitatifs de mise en oeuvre de celle-ci et à l'examen du dessin annexé sur lequel :
- la figure 1 représente un réseau électrique selon l'art antérieur déjà commenté,
- la figure 2 représente un réseau électrique selon un premier exemple comparatif non-revendiqué.
- les figures 3 à 6 sont des exemples de réalisation d'organes de liaison, et
- les figures 7 et 8 représentent des réseaux électriques selon d'autres exemples de mise en oeuvre de l'invention.

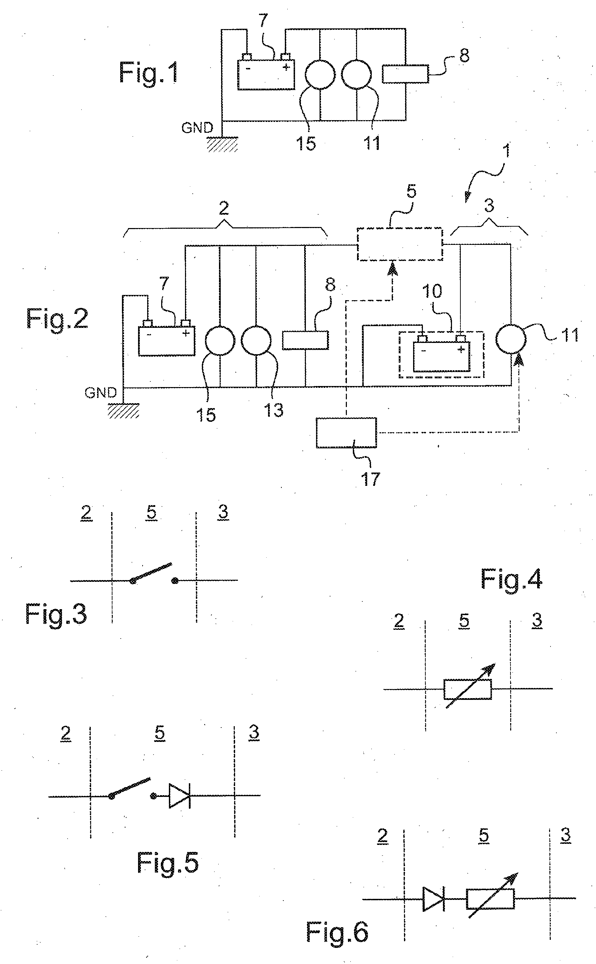

On a représenté à la figure 2 un réseau électrique 1 selon un premier exemple non-revendiqué. Ce réseau 1 comporte un premier circuit 2 et un deuxième circuit 3. Dans l'exemple de la figure 2, le premier 2 et le deuxième 3 circuit sont reliés entre eux par un organe de liaison 5.

Comme représenté sur la figure 2, le premier circuit 2 comporte une première source d'alimentation 7 alimentant des premiers composants électroniques 8. Dans l'exemple représenté, les premiers composants électroniques 8 sont montés en parallèle aux bornes de la première source 7. Les composants électroniques 8 sont par exemple des composants de confort et/ou de sécurité.

Le deuxième circuit 3 comprend une deuxième source d'alimentation 10 aux bornes de laquelle est branché un deuxième composant électronique 11. Le deuxième composant électronique est dans l'exemple considéré un compresseur configuré pour délivrer de l'air dans la ligne d'admission d'un moteur thermique, ce compresseur secondant notamment le turbocompresseur du véhicule à bas régime et pendant les augmentations transitoires de charge.

La première source 7 et la deuxième source 10 peuvent être de même type ou de types différents. Lorsque ces sources sont des batteries, elles peuvent délivrer des tensions différentes et/ou mettre en oeuvre des réactions chimiques utilisant des réactifs différents.

La première source 7 délivre par exemple une tension continue de 12V tandis que la deuxième source 10 délivre une tension continue comprise entre 12V et 30 V, par exemple de 12 V.

Dans l'exemple comparatif de la figure 2, le premier circuit 2 comprend encore un démarreur 13 et un alternateur 15, le démarreur 13 et l'alternateur 15 étant chacun monté aux bornes de la première source 7.

Le réseau 1 comprend encore une unité de contrôle 17, configurée de préférence pour agir sur la configuration de l'organe de liaison 5 et pour activer ou non le deuxième composant électronique 11. L'unité de contrôle 17 peut être centralisée ou non et met par exemple en oeuvre un ou plusieurs micro-contrôleurs. Le fonctionnement de cette unité de contrôle 17 sera décrit par la suite.

Comme on peut le voir en comparant les figures 1 et 2, l'exemple comparatif permet, contrairement au réseau selon l'art antérieur de la figure 1, de disposer de deux circuits 2 et 3, de sorte que les premiers composants électroniques 8 font partie du premier circuit 2 et que le deuxième composant électronique 11 fait partie du deuxième circuit 3. Les premiers composants électroniques 8 sont alimentés par une source 7 tandis que le deuxième composant électronique 11 est alimenté par une autre source 10. Dans le réseau 1 représenté sur la figure 1, tous les composants font partie d'un même circuit et sont alimentés par une unique source d'alimentation.

On va maintenant décrire, en référence aux figures 3 à 6 différents exemples d'organe de liaison 5.

L'organe de liaison 5 peut prendre au moins deux configurations. Selon la première configuration, un échange de courant d'une première valeur est possible entre le premier circuit 2 et le deuxième circuit 3. Selon une deuxième configuration, un courant d'une deuxième valeur inférieure à la première valeur est échangé entre le premier circuit 2 et le deuxième circuit 3.

Dans l'exemple de la figure 3, l'organe de liaison 5 est un interrupteur, par exemple un interrupteur mécanique tel qu'un poussoir, un interrupteur électro-mécanique tel qu'un relais ou encore un interrupteur électronique tel qu'un transistor.

Dans l'exemple de la figure 3, l'interrupteur est fermé dans la première configuration et ouvert dans la deuxième configuration. Dans ce cas, le courant échangé entre le premier circuit 2 et le deuxième circuit 3 est nul lorsque l'organe de liaison 5 est dans la seconde configuration.

Dans un autre exemple non représenté, l'organe de liaison 5 est obtenu à l'aide d'un interrupteur à fonctionnement linéaire lorsqu'il se ferme.

Dans l'exemple de la figure 4, l'organe de liaison 5 est une résistance variable. Une première valeur de cette résistance donne la première configuration de l'organe de liaison tandis qu'une deuxième valeur de cette résistance variable 5, supérieure à la première valeur, donne la deuxième configuration de l'organe de liaison 5. La deuxième valeur est par exemple dix fois, notamment vingt fois, notamment quarante fois, voire cent fois, plus grande que la première valeur. La première valeur est par exemple de l'ordre de 0,5 mΩ et la deuxième valeur est par exemple de 20 mΩ. Le courant échangé lorsque l'organe de liaison est dans la première configuration peut être au moins le double de celui échangé lorsque l'organe de liaison est dans la deuxième configuration.

Ainsi, la deuxième valeur de la résistance variable rend plus difficile l'échange de courant entre le premier 2 et le deuxième 3 circuit à travers l'organe de liaison 5.

L'organe de liaison peut en outre ne permettre l'échange de courant que du premier 2 vers le deuxième 3 circuit, comme illustré sur les figures 5 et 6 sur lesquelles un composant unidirectionnel, tel qu'une diode, est ajouté à l'interrupteur ou à la résistance variable des figures 3 et 4 pour empêcher le passage du courant du deuxième 3 vers le premier 2 circuit.

Le fonctionnement du réseau 1 selon ce premier exemple de mise en oeuvre va maintenant être décrit.

Lorsque le deuxième composant électronique 11 n'est pas activé, seuls les premiers composants 8, et éventuellement le démarreur 13, consomment de la puissance électrique. Dans ce cas, le deuxième composant électronique 11 ne peut perturber le réseau et l'organe de liaison 5 peut être dans la première configuration dans laquelle un échange de courant est possible entre le premier circuit 2 et le deuxième circuit 3.

L'unité de contrôle 17 peut déterminer que le deuxième composant électronique 11 doit être activé. C'est notamment le cas dans l'exemple illustré en bas régime ou en cas d'augmentation transitoire de charge. Avant d'activer le deuxième composant électronique 11, l'unité de contrôle peut déterminer si l'organe de liaison 5 est dans la deuxième configuration dans laquelle il rend plus difficile, voire empêche, tout échange de courant entre le premier circuit 2 et le deuxième circuit 3. Dans la négative, l'unité de contrôle 17 peut préalablement commander l'organe de liaison 5 pour que ce dernier passe dans la deuxième configuration avant d'activer le deuxième composant électronique 11. En variante, simultanément à l'activation du deuxième composant électronique 11, l'unité de contrôle 17 provoque le passage de l'organe de liaison 5 dans la deuxième configuration.

Lorsqu'il est activé, le deuxième composant électronique 11 peut ainsi être alimenté essentiellement, voire seulement, par la deuxième source d'alimentation 10, selon la valeur du courant échangé entre le premier circuit 2 et le deuxième circuit 3 dans cette deuxième configuration de l'organe de liaison 5. Ainsi, la tension délivrée par la première source 7 aux composants 8 n'est que peu ou pas affectée par l'activation du deuxième composant électronique 11.

Lorsque l'alternateur 15 est entraîné, ce dernier peut injecter du courant dans le réseau 1. Cette injection de courant par l'alternateur 15 peut être détectée par l'unité de contrôle 17 et cette dernière peut agir sur l'organe de liaison 5 pour permettre la recharge par l'alternateur 15 de l'une et/ou l'autre des sources 7 et 10.

Dans l'exemple comparatif de la figure 2, l'alternateur recharge la première source 7 quelle que soit la configuration de l'organe de liaison 5 et sa capacité à recharger la deuxième source 10 dépend de la configuration de l'organe de liaison 5. Lorsque l'organe de liaison 5 est dans la première configuration, un courant relativement important peut passer du premier circuit 2 au deuxième circuit 3, ce courant permettant la recharge de la deuxième source d'alimentation 10.

Si le deuxième composant électronique 11 est activé pendant que l'alternateur 15 injecte du courant dans le premier circuit 2, l'unité de contrôle 17 peut provoquer le passage de l'organe de liaison 5 dans la deuxième configuration. Lorsque l'organe de liaison 5 est tel que représenté sur les figures 4 et 6, du courant injecté par l'alternateur 15 peut passer du premier circuit 2 vers le deuxième circuit 3 et ce courant, bien qu'ayant une deuxième valeur inférieure à la première valeur du courant qui serait transmis au deuxième circuit 3 si l'organe de liaison 5 était dans la première configuration, permet néanmoins la recharge de la deuxième source d'alimentation 10.

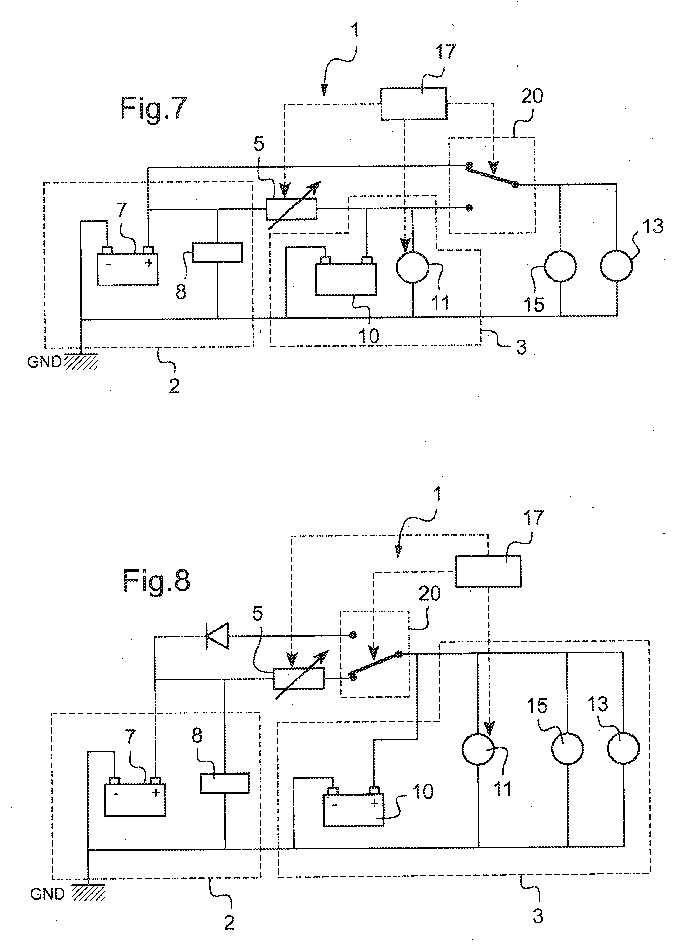

On va maintenant décrire en référence à la figure 7 un réseau 1 selon un exemple de mise en oeuvre de l'invention. Ce réseau diffère de celui décrit en référence à la figure 2 par le fait que l'alternateur 15 et le démarreur 13 ne font pas partie du premier circuit mais sont séparés du reste du réseau 1 par un commutateur 20. Ce commutateur 20 peut, comme représenté sur la figure 7 basculer entre une position dans laquelle l'alternateur 15 et le démarreur 13 sont montés en parallèle aux bornes de la première source d'alimentation 7 et une deuxième position dans laquelle l'alternateur 15 et le démarreur 13 sont montés en parallèle aux bornes de la deuxième source d'alimentation 10. La position du commutateur représentée à la figure 7 peut permettre de prioriser la recharge d'une source d'alimentation plutôt qu'une autre. Le commutateur est par exemple commandé par l'unité de contrôle 17.

Lorsque le commutateur occupe l'une des deux positions ci-dessus, la source d'alimentation aux bornes de laquelle l'alternateur 15 et le démarreur 13 ne sont pas branchés est néanmoins reliée à l'alternateur 15 et au démarreur 13 via l'organe de liaison 5.

Dans l'exemple de la figure 7, l'organe de liaison 5 est une résistance variable.

Lorsque le commutateur 20 occupe la position dans laquelle le démarreur 13 et l'alternateur 15 sont montés en parallèle aux bornes de la deuxième source d'alimentation 10, contrairement à la position représentée sur la figure 7, le deuxième circuit 3 est interposé entre le premier circuit 2 et le montage comprenant deux branches en parallèle dont l'une est l'alternateur 15 et dont l'autre est le démarreur 13.

Le réseau 1 peut alors fonctionner comme suit. Lors du démarrage, l'organe de liaison 5 peut être dans la première configuration, ce qui permet que le démarreur 13 soit alimenté par la deuxième source 10 et, autant que possible, par la première source 7 à travers l'organe de liaison 5.

Après le démarrage et lorsque le deuxième composant électronique 11 n'est pas activé, l'organe de liaison 5 peut être maintenu dans la première configuration, de sorte que les premiers composants électroniques 8 peuvent être alimentés par la première source d'alimentation 7 et, autant que possible, par la deuxième source d'alimentation 10 à travers l'organe de liaison 5.

Lorsque l'on souhaite activer le deuxième composant électronique 11, l'unité de contrôle 17 peut commander le passage de l'organe de liaison 5 dans la deuxième configuration. La valeur de la résistance est ainsi augmentée d'un facteur de l'ordre de vingt, par exemple. Dans cette deuxième configuration, la tension aux bornes de la première source d'alimentation 7 ne varie que peu. Lorsque la tension initialement délivrée par la source 7 est de 12V, une chute de tension de 0,5V peut être mesurée pour cette source 7, du fait de l'activation du composant électronique 11. Lorsque la tension initialement délivrée par la deuxième source 10 est de 12V, une chute de tension comprise entre 1 et 1,5V peut être mesurée pour cette source 10, du fait de l'activation du deuxième composant électronique 11.

Lorsque l'unité de contrôle 17 ordonne à l'alternateur 15 d'injecter du courant dans le réseau 1 et que le deuxième composant électronique 11 n'est pas activé, elle peut commander l'organe de liaison 5 pour que celui-ci reste ou passe dans la première configuration, de manière à ce que la deuxième et la première source d'alimentation soient rechargées. Les premiers composants électroniques 8 peuvent également être alimentés par l'alternateur 15 dans ce cas.

Lorsque l'alternateur 15 injecte du courant dans le réseau 1 et que l'on souhaite activer le deuxième composant électronique 11, l'unité de contrôle 17 peut commander l'organe de liaison 5 pour que celui-ci passe dans la deuxième configuration. La valeur plus élevée de la résistance variable de l'organe de liaison 15 permet de réduire la valeur du courant traversant celui-ci, ce qui diminue les pertes Joule dans cette résistance. En outre, du fait de cette valeur réduite du courant, la chute de tension sur la tension aux bornes de la première source d'alimentation 7 est plus réduite que si l'organe de liaison 5 était dans la première configuration.

Les différents éléments du réseau représenté à la figure 2 sont dans un exemple donné dimensionnés comme suit. La première source 7 et la deuxième source 10 sont identiques et délivrent une tension de 12V avec une capacité de 80 Ah. L'organe de liaison 5 a une résistance de 0,5 mΩ dans la première configuration et de 20 mΩ dans la deuxième configuration. Le commutateur 20 est dimensionné pour transmettre un courant maximal de 100 A et supporte une puissance maximale de 5 W lorsqu'il est dans la position représentée sur la figure 7 et il transmet un courant maximal de 175 A et supporte une puissance maximale de 15 W lorsqu'il est dans la position correspondant aux cas que l'on vient de décrire. L'alternateur 15 débite dans le réseau un courant maximal de 180 A et délivre une puissance maximale de 2,5 kW.

On va maintenant décrire en référence à la figure 8 un réseau 1 selon un deuxième exemple de mise en oeuvre de l'invention.

Cet exemple diffère de ceux précédemment décrits par le fait que le démarreur 13 et l'alternateur 15 font partie du second circuit 3. Le démarreur 13 et l'alternateur 15 sont ici chacun montés en parallèle aux bornes de la deuxième source 10. Le premier circuit 2 et le deuxième circuit 3 sont séparés par le commutateur 20. Ce dernier relie la borne positive de la deuxième source 10 :
- à la borne positive de la première source 7 via un composant unidirectionnel tel qu'une diode empêchant le transfert de courant de la première source 7 vers la deuxième source 10, dans une première position du commutateur et,
- à la borne positive de la première source 7 via l'organe de liaison 5 dans une deuxième position du commutateur.

La première position du commutateur 20 est particulièrement adaptée pour permettre l'activation du deuxième composant électronique 11 pendant que l'alternateur 15 débite dans le réseau pour recharger les sources 7 et 10. Dans un tel cas, aucune chute de tension n'est engendrée pour la première source 7 car aucun courant ne parcoure la résistance 5 de l'organe de liaison et car la première source 7 n'alimente pas le deuxième composant électronique 11.

Dans les autres cas, à savoir démarrage, phase post-démarrage avec ou sans activation du deuxième composant électronique, ou recharge lorsque le deuxième composant électronique n'est pas activé, le commutateur 20 peut être en deuxième position, c'est-à-dire que l'organe de liaison 5 est interposé entre le premier circuit 2 et le deuxième circuit 3.

L'invention n'est pas limitée aux exemples qui viennent d'être décrits mais seulement par les revendications.

L'expression « comportant un » doit être comprise comme signifiant « comportant au moins un ».

## Revendications

1. Réseau électrique (1) pour un véhicule, comprenant :
- un premier circuit (2) comprenant une première source d'alimentation (7) et au moins un premier composant électronique (8) alimenté par la première source d'alimentation (7),
- un deuxième circuit (3) comprenant une deuxième source d'alimentation (10) et au moins un deuxième composant électronique (11) activable et alimenté par la deuxième source d'alimentation (10),
- un alternateur (15) injectant du courant électrique dans le réseau (1) lorsqu'il est entraîné pour alimenter la première (7) et/ou la deuxième (10) source d'alimentation le réseau (1) comportant en outre :
- un organe de liaison (5) entre le premier (2) et le deuxième circuit (3), l'organe de liaison (5) permettant, dans une première configuration, un échange de courant d'une première valeur entre le premier (2) et le deuxième circuit (3) et, dans une deuxième configuration, un échange de courant d'une deuxième valeur entre le premier (2) et le deuxième (3) circuit, la deuxième valeur étant inférieure à la première valeur, et
- une unité de contrôle (17) commandant la configuration de l'organe de liaison (5),
le réseau étant **caractérisé en ce qu'**il comporte en plus de l'organe de liaison (5) un commutateur (20), le commutateur (20) et l'alternateur (15) étant disposés dans le réseau (1) de manière à ce que l'alternateur (15) soit relié à la première source d'alimentation (7) ou à la deuxième source d'alimentation (10) en fonction de la position du commutateur (20).

2. Réseau selon la revendication 1, le rapport entre la puissance électrique consommée par le ou les deuxièmes composants électroniques (11) et la puissance électrique consommée par le ou les premiers composants électroniques (8) étant supérieur à 1, étant notamment compris entre 1 et 5.

3. Réseau selon la revendication 1 ou 2, la puissance consommée par le deuxième composant électronique (11) étant supérieure ou égale à 1 kW.

4. Réseau selon l'une quelconque des revendications 1 à 3, l'organe de liaison (5) comprenant un interrupteur, cet interrupteur étant fermé lorsque l'organe de liaison (5) est dans la première configuration et ouvert lorsque l'organe de liaison (5) est dans la deuxième configuration.

5. Réseau selon l'une quelconque des revendications 1 à 3, l'organe de liaison (5) comprenant une impédance dont la valeur varie de façon linéaire et la valeur de l'impédance dans la première configuration de l'organe de liaison étant inférieure à celle dans la deuxième configuration de l'organe de liaison.

6. Réseau selon la revendication précédente, le rapport entre l'impédance dans la deuxième configuration et l'impédance dans la première configuration étant égal à au moins dix.

7. Réseau selon l'une quelconque des revendications précédentes, la première (7) et la deuxième (10) source d'alimentation étant des unités de stockage d'énergie, notamment des batteries.

8. Réseau selon l'une quelconque des revendications précédentes, l'unité de contrôle (17) étant configurée pour commander l'activation et/ou la désactivation du deuxième composant électronique (11).

9. Réseau selon la revendication précédente, l'unité de contrôle (17) étant configurée pour détecter la configuration de l'organe de liaison (5) avant d'activer le deuxième composant électronique (11).

10. Réseau selon l'une quelconque des revendications précédentes, l'unité de contrôle (17) étant configurée pour commander l'organe de liaison (5) de manière à ce que lorsque l'alternateur (15) est entraîné, la première (7) et/ou la deuxième (10) source d'alimentation soient électriquement alimentées.

11. Réseau selon l'une quelconque des revendications précédentes, la première configuration de l'organe de liaison (5) permettant l'alimentation de la première source d'alimentation (7) et de la deuxième source d'alimentation (10) par l'alternateur (15).

12. Réseau selon la revendication 11, l'alternateur (15) faisant partie du premier circuit (2) et alimentant électriquement, lorsqu'il est entraîné, la deuxième source d'alimentation (10), au moins lorsque l'organe de liaison (5) est dans la première configuration.

13. Réseau selon la revendication 11, l'alternateur (15) faisant partie du deuxième circuit (3) et alimentant, lorsqu'il est entraîné, la première source d'alimentation (7), au moins lorsque l'organe de liaison (5) est dans la première configuration.

14. Réseau selon l'une quelconque des revendications précédentes, l'organe de liaison (5) étant configuré pour empêcher que la deuxième source d'alimentation (10) n'alimente la première source d'alimentation (7), au moins lorsque l'organe de liaison est dans la première configuration.

15. Réseau selon l'une quelconque des revendications précédentes, le deuxième composant électronique (11) étant un compresseur configuré pour délivrer de l'air dans la ligne d'admission d'un moteur thermique.

16. Procédé de gestion d'un réseau électrique (1) d'un véhicule, le réseau comprenant :
- un premier circuit (2) comprenant une première source d'alimentation (7) et au moins un premier composant électronique (8) alimenté par la première source d'alimentation (7),
- un deuxième circuit (3) comprenant une deuxième source d'alimentation (10) et au moins un deuxième composant électronique (11) activable et alimenté par la deuxième source d'alimentation (10),
- un organe de liaison (5) permettant dans une première configuration un échange de courant d'une première valeur entre le premier (2) et le deuxième (3) circuit et, dans une deuxième configuration, un échange de courant d'une deuxième valeur entre le premier (2) et le deuxième (3) circuit, la deuxième valeur étant inférieure à la première valeur et,
- une unité de contrôle (17) commandant la configuration de l'organe de liaison (5)
- un alternateur (15) injectant du courant électrique dans le réseau (1) lorsqu'il est entraîné
procédé dans lequel l'unité de contrôle (17) agit sur l'organe de liaison (5) pour que ce dernier réduise, voire empêche, l'échange de courant entre le premier (2) et le deuxième (3) circuit, au moins lorsque le deuxième composant électronique (11) est activé, procédé dans lequel, le réseau comportant en plus de l'organe de liaison (5) un commutateur (20), l'alternateur (15) est relié à la première source d'alimentation (7) ou à la deuxième source d'alimentation (10) en fonction de la position du commutateur (20).

17. Procédé selon la revendication 16, dans lequel l'unité de contrôle (17) commande l'activation et/ou la désactivation du deuxième composant électronique (11) et dans lequel la commande de l'activation, respectivement de la désactivation, du deuxième composant électronique (11) est synchronisée avec la commande de l'organe de liaison (5) pour que ce dernier soit dans la deuxième, respectivement première, configuration.

## Patentansprüche

1. Elektrisches Netzwerk (1) für ein Fahrzeug, umfassend:
- eine erste Schaltung (2), die eine erste Stromquelle (7) und mindestens eine erste elektronische Komponente (8) aufweist, die von der ersten Stromquelle (7) gespeist wird,
- eine zweite Schaltung (3), die eine zweite Stromquelle (10) und mindestens eine zweite elektronische Komponente (11) aufweist, die aktivierbar ist und von der zweiten Stromquelle (10) gespeist wird,
- einen Wechselstromgenerator (15), der elektrischen Strom in das Netzwerk (1) einspeist, wenn er angetrieben wird, um die erste (7) und/oder die zweite (10) Stromquelle zu speisen,
wobei das Netzwerk (1) ferner Folgendes aufweist:
- ein Verbindungsorgan (5) zwischen der ersten (2) und der zweiten Schaltung (3), wobei das Verbindungsorgan (5) in einer ersten Konfiguration einen Austausch von einem Strom von einem ersten Wert zwischen der ersten (2) und der zweiten Schaltung (3) und in einer zweiten Konfiguration einen Austausch von einem Strom von einem zweiten Wert zwischen der ersten (2) und der zweiten (3) Schaltung ermöglicht, wobei der zweite Wert niedriger als der erste Wert ist, und
- eine Steuereinheit (17), die die Konfiguration des Verbindungsorgans (5) steuert,
wobei das Netzwerk **dadurch gekennzeichnet ist, dass** es zusätzlich zu dem Verbindungsorgan (5) einen Wahlschalter (20) aufweist, wobei der Wahlschalter (20) und der Wechselstromgenerator (15) in dem Netzwerk (1) derart angeordnet sind, dass der Wechselstromgenerator (15) mit der ersten Stromquelle (7) oder mit der zweiten Stromquelle (10) in Abhängigkeit von der Position des Wahlschalters (20) verbunden ist.

2. Netzwerk nach Anspruch 1, wobei das Verhältnis zwischen der elektrischen Leistung, die von der oder den zweiten elektronischen Komponenten (11) verbraucht wird, und der elektrischen Leistung, die von der oder den ersten elektronischen Komponenten (8) verbraucht wird, größer als 1 ist, wobei es insbesondere zwischen 1 und 5 liegt.

3. Netzwerk nach dem Anspruch 1 oder 2, wobei die Leistung, die von der zweiten elektronischen Komponente (11) verbraucht wird, größer oder gleich 1 kW ist.

4. Netzwerk nach einem der Ansprüche 1 bis 3, wobei das Verbindungsorgan (5) einen Schalter aufweist, wobei dieser Schalter geschlossen ist, wenn das Verbindungsorgan (5) in der ersten Konfiguration ist, und offen ist, wenn das Verbindungsorgan (5) in der zweiten Konfiguration ist.

5. Netzwerk nach einem der Ansprüche 1 bis 3, wobei das Verbindungsorgan (5) eine Impedanz aufweist, deren Wert sich linear verändert, und wobei der Wert der Impedanz in der ersten Konfiguration des Verbindungsorgans niedriger als jener in der zweiten Konfiguration des Verbindungsorgans ist.

6. Netzwerk nach dem vorhergehenden Anspruch, wobei das Verhältnis zwischen der Impedanz in der zweiten Konfiguration und der Impedanz in der ersten Konfiguration mindestens gleich zehn ist.

7. Netzwerk nach einem der vorhergehenden Ansprüche, wobei die erste (7) und die zweite (10) Stromquelle Energiespeichereinheiten, insbesondere Batterien, sind.

8. Netzwerk nach einem der vorhergehenden Ansprüche, wobei die Steuereinheit (17) konfiguriert ist, um das Aktivieren und/oder das Deaktivieren der zweiten elektronischen Komponente (11) zu steuern.

9. Netzwerk nach dem vorhergehenden Anspruch, wobei die Steuereinheit (17) konfiguriert ist, um die Konfiguration des Verbindungsorgans (5) vor dem Aktivieren der zweiten elektronischen Komponente (11) zu erkennen.

10. Netzwerk nach einem der vorhergehenden Ansprüche, wobei die Steuereinheit (17) konfiguriert ist, um das Verbindungsorgan (5) derart zu steuern, dass, wenn der Wechselstromgenerator (15) angetrieben wird, die erste (7) und/oder die zweite (10) Stromquelle elektrisch gespeist werden.

11. Netzwerk nach einem der vorhergehenden Ansprüche, wobei die erste Konfiguration des Verbindungsorgans (5) das Speisen der ersten Stromquelle (7) und der zweiten Stromquelle (10) durch den Wechselstromgenerator (15) ermöglicht.

12. Netzwerk nach Anspruch 11, wobei der Wechselstromgenerator (15) Teil der ersten Schaltung (2) ist und, wenn er angetrieben wird, die zweite Stromquelle (10) mindestens dann elektrisch speist, wenn das Verbindungsorgan (5) in der ersten Konfiguration ist.

13. Netzwerk nach Anspruch 11, wobei der Wechselstromgenerator (15) Teil der zweiten Schaltung (3) ist und, wenn er angetrieben wird, die erste Stromquelle (7) mindestens dann speist, wenn das Verbindungsorgan (5) in der ersten Konfiguration ist.

14. Netzwerk nach einem der vorhergehenden Ansprüche, wobei das Verbindungsorgan (5) konfiguriert ist, um zu verhindern, dass die zweite Stromquelle (10) die erste Stromquelle (7) mindestens dann nicht speist, wenn das Verbindungsorgan in der ersten Konfiguration ist.

15. Netzwerk nach einem der vorhergehenden Ansprüche, wobei die zweite elektronische Komponente (11) ein Kompressor ist, der konfiguriert ist, um zu der Einlassleitung eines Verbrennungsmotors Luft zuzuführen.

16. Verfahren zum Verwalten eines elektrischen Netzwerks (1) eines Fahrzeugs, wobei das Netzwerk Folgendes aufweist:
- eine erste Schaltung (2), die eine erste Stromquelle (7) und mindestens eine erste elektronische Komponente (8) aufweist, die von der ersten Stromquelle (7) gespeist wird,
- eine zweite Schaltung (3), die eine zweite Stromquelle (10) und mindestens eine zweite elektronische Komponente (11) aufweist, die aktivierbar ist und von der zweiten Stromquelle (10) gespeist wird,
- ein Verbindungsorgan (5), das in einer ersten Konfiguration einen Austausch von einem Strom von einem ersten Wert zwischen der ersten (2) und der zweiten Schaltung (3) und in einer zweiten Konfiguration einen Austausch von einem Strom von einem zweiten Wert zwischen der ersten (2) und der zweiten (3) Schaltung ermöglicht, wobei der zweite Wert niedriger als der erste Wert ist, und
- eine Steuereinheit (17), die die Konfiguration des Verbindungsorgans (5) steuert,
- einen Wechselstromgenerator (15), der elektrischen Strom in das Netzwerk (1) einspeist, wenn er angetrieben wird,
Verfahren, wobei die Steuereinheit (17) auf das Verbindungsorgan (5) einwirkt, damit dieses Letztere den Austausch von Strom zwischen der ersten (2) und der zweiten (3) Schaltung mindestens dann reduziert oder sogar verhindert, wenn die zweite elektronische Komponente (11) aktiviert wird, Verfahren, wobei, wobei das Netzwerk zusätzlich zu dem Verbindungsorgan (5) einen Wahlschalter (20) aufweist, der Wechselstromgenerator (15) mit der ersten Stromquelle (7) oder mit der zweiten Stromquelle (10) in Abhängigkeit von der Position des Wahlschalters (20) verbunden wird.

17. Verfahren nach Anspruch 16, wobei die Steuereinheit (17) das Aktivieren und/oder das Deaktivieren der zweiten elektronischen Komponente (11) steuert und wobei das Steuern des Aktivierens beziehungsweise des Deaktivierens der zweiten elektronischen Komponente (11) mit dem Steuern des Verbindungsorgans (5) synchronisiert wird, damit dieses Letztere in der zweiten beziehungsweise ersten Konfiguration ist.

## Claims

1. Electrical network (1) for a vehicle, comprising:
- a first circuit (2) comprising a first power source (7) and at least one first electronic component (8) powered by the first power source (7),
- a second circuit (3) comprising a second power source (10) and at least one second electronic component (11) which can be activated and is powered by the second power source (10),
an alternator (15) injecting electrical current into the network (1) when it is driven to power the first (7) and/or the second (10) power source(s),
the network (1) also comprising:
- a link member (5) between the first (2) and the second (3) circuits, the link member (5) allowing, in a first configuration, an exchange of current of a first value between the first (2) and the second (3) circuits and, in a second configuration, an exchange of current of a second value between the first (2) and the second (3) circuits, the second value being lower than the first value, and
- a control unit (17) controlling the configuration of the link member (5), the network being **characterized in that** it comprises, in addition to the link member (5), a switch (20), the switch (20) and the alternator (15) being arranged in the network (1) in such a way that the alternator (15) is linked to the first power source (7) or to the second power source (10) depending on the position of the switch (20).

2. Network according to Claim 1, the ratio between the electrical power consumed by the second electronic component(s) (11) and the electrical power consumed by the first electronic component(s) (8) being greater than 1, being notably between 1 and 5.

3. Network according to Claim 1 or 2, the power consumed by the second electronic component (11) being greater than or equal to 1 kW.

4. Network according to any one of Claims 1 to 3, the link member (5) comprising a switch, this switch being closed when the link member (5) is in the first configuration and open when the link member (5) is in the second configuration.

5. Network according to any one of Claims 1 to 3, the link member (5) having an impedance with a value that varies linearly and the value of the impedance in the first configuration of the link member being lower than that in the second configuration of the link member.

6. Network according to the preceding claim, the ratio between the impedance in the second configuration and the impedance in the first configuration being equal to at least ten.

7. Network according to any one of the preceding claims, the first (7) and the second (10) power sources being energy storage units, notably batteries.

8. Network according to any one of the preceding claims, the control unit (17) being configured to control the activation and/or the deactivation of the second electronic component (11).

9. Network according to the preceding claim, the control unit (17) being configured to detect the configuration of the link member (5) before activating the second electronic component (11).

10. Network according to any one of the preceding claims, the control unit (17) being configured to control the link member (5) in such a way that, when the alternator (15) is driven, the first (7) and/or the second (10) power source(s) is/are electrically powered.

11. Network according to any one of the preceding claims, the first configuration of the link member (5) making it possible to power the first power source (7) and the second power source (10) by the alternator (15).

12. Network according to Claim 11, the alternator (15) forming part of the first circuit (2) and electrically powering, when it is driven, the second power source (10), at least when the link member (5) is in the first configuration.

13. Network according to Claim 11, the alternator (15) forming part of the second circuit (3) and powering, when it is driven, the first power source (7), at least when the link member (5) is in the first configuration.

14. Network according to any one of the preceding claims, the link member (5) being configured to prevent the second power source (10) from powering the first power source (7), at least when the link member is in the first configuration.

15. Network according to any one of the preceding claims, the second electronic component (11) being a compressor configured to deliver air into the intake line of a heat engine.

16. Method for managing an electrical network (1) of a vehicle, the network comprising:
- a first circuit (2) comprising a first power source (7) and at least one first electronic component (8) powered by the first power source (7),
- a second circuit (3) comprising a second power source (10) and at least one second electronic component (11) which can be activated and is powered by the second power source (10),
- a link member (5) allowing, in a first configuration, an exchange of current of a first value between the first (2) and the second (3) circuits and, in a second configuration, an exchange of current of a second value between the first (2) and the second (3) circuits, the second value being lower than the first value, and
- a control unit (17) controlling the configuration of the link member (5),
- an alternator (15) injecting electrical current into the network (1) when it is driven,
a method in which the control unit (17) acts on the link member (5) for the latter to reduce, or even prevent, the exchange of current between the first (2) and the second (3) circuits, at least when the second electronic component (11) is activated,
a method in which, the network comprising, in addition to the link member (5), a switch (20), the alternator (15) is linked to the first power source (7) or to the second power source (10) depending on the position of the switch (20).

17. Method according to Claim 16, in which the control unit (17) controls the activation and/or the deactivation of the second electronic component (11) and in which the control of the activation, respectively of the deactivation, of the second electronic component (11) is synchronized with the control of the link member (5) for the latter to be in the second, respectively first, configuration.
